# EUROPEAN PATENT APPLICATION

(11) **EP 3 858 534 A1**
(43) Date of publication of application: **04.08.2021**
(21) Application number: 18935491.3
(22) Date of filing: 28.09.2018
(51) Int. Cl.: B23K 26/082, B23K 26/08

(54) **LASER MACHINING APPARATUS**

(71) Applicant: Makino Milling Machine Co., Ltd., Tokyo 152-8578 (JP)
(72) Inventor: YADA, Kenichi, Aiko-gun, Kanagawa 243-0303 (JP)
(74) Representative: McWilliams, David John
(86) International application number: PCT/JP2018/036521
(87) International publication number: WO 2020/065997

(57) **Abstract**

A laser machining apparatus (100) for machining a workpiece (W) placed and fixed on a table (108) by moving the irradiation position of a laser beam on the workpiece while irradiating the workpiece is provided with: a laser oscillator (156); a laser irradiation head (110) that emits the laser beam from the laser oscillator toward the workpiece and that is provided with a galvano-scanner for moving a laser beam irradiation position on the surface of the workpiece in two directions; a parallel manipulator (130) that changes the orientation of the laser irradiation head; a slide member (114) that supports the parallel manipulator; and linear feed shaft device (150, 152) that moves the slide member in at least two orthogonal directions relatively to the table.

## Description

### FIELD

The present invention relates to a laser machining apparatus which machines a workpiece by emitting laser light toward a workpiece arranged on a table and changing an irradiation position of the laser light on a surface of the workpiece.

### BACKGROUND

Patent Literature 1 describes a laser machining apparatus which forms a circuit on the surface of a three-dimensional substrate by laser light irradiation, wherein the three-dimensional substrate is arranged in a jig which is posture-controlled by a positioning mechanism which is a combination of a parallel link mechanism and a serial link mechanism, and the circuit is formed on a plurality of surfaces of the three-dimensional substrate by the positioning mechanism and a laser light irradiation position determination mechanism.

### [CITATION LIST]

### [PATENT LITERATURE]

[PTL 1] Japanese Unexamined Patent Publication (Kokai) No. 2001-068817

### SUMMARY

### [TECHNICAL PROBLEM]

In the laser machining apparatus of Patent Literature 1, though the size of the apparatus can be reduced while enabling laser light irradiation on each surface of the three-dimensional substrate, each time the workpiece (three-dimensional substrate) mounting jig is replaced, positioning correction of the mounting jig must be performed for both the parallel link mechanism and the serial link mechanism, and thus, there is a problem in that the setup operation is complicated and time-consuming.

The present invention aims to solve such problems of the prior art, and an object thereof is to provide a laser machining apparatus which can perform high-precision machining with a short machining time and a short setup process.

In order to achieve the above object, according to the present invention, there is provided a laser machining apparatus which machines a workpiece by moving an irradiation position of laser light on the workpiece while irradiating the workpiece, which is arranged and affixed on a table, with the laser light, the laser machining apparatus comprising a laser oscillator, a laser irradiation head which emits laser light from the laser oscillator toward the workpiece, the laser irradiation head comprising a Galvano scanner for moving an irradiation position of the laser light on a surface of the workpiece in two directions, a parallel manipulator which changes a posture of the laser irradiation head, a slide member which supports the parallel manipulator, and a linear feed axis device which moves the slide member relative to the table in at least two orthogonal directions.

### [ADVANTAGEOUS EFFECTS OF INVENTION]

According to the present invention, since the posture of the laser irradiation head can be changed relative to the slide member, which can move in two orthogonal axial directions, the laser light can be emitted in directions in which machining could not conventionally be performed, and for example, it is possible to machine the side surfaces extending parallel to the optical axis of the laser irradiation head. Furthermore, according to the present invention, since the posture of the laser irradiation head can be changed relative to the slide member, which can move in two orthogonal axial directions, the machining range is widened as compared with, for example, the laser machining apparatus of Patent Literature 1.

Since the laser irradiation head is attached to the slide member via the parallel manipulator, once the laser irradiation head is positioned with respect to the slide member, since it is not necessary to again position the laser irradiation head relative to the slide member, even if the workpiece to be machined changes or the machining process or machining type changes, setup can be performed in a short time.

### BRIEF DESCRIPTION OF DRAWINGS

FIG. 1 is a schematic view of a laser machining apparatus according to a preferred embodiment of the present invention.
FIG. 2 is a perspective view showing an enlargement of the attachment portion of the laser irradiation head of the laser machining apparatus of FIG. 1.
FIG. 3 is a schematic perspective view showing a Galvano scanner.
FIG. 4 is a schematic perspective view showing a parallel link mechanism.
FIG. 5 is a schematic view detailing the mode of operation of the present invention.
FIG. 6 is a schematic view detailing the mode of operation of the present invention.
FIG. 7 is a schematic view detailing the mode of operation of the present invention.
FIG. 8 is a schematic view detailing the mode of operation of the present invention.

### DESCRIPTION OF EMBODIMENTS

The preferred embodiments of the present invention will be described below with reference to the attached drawings.

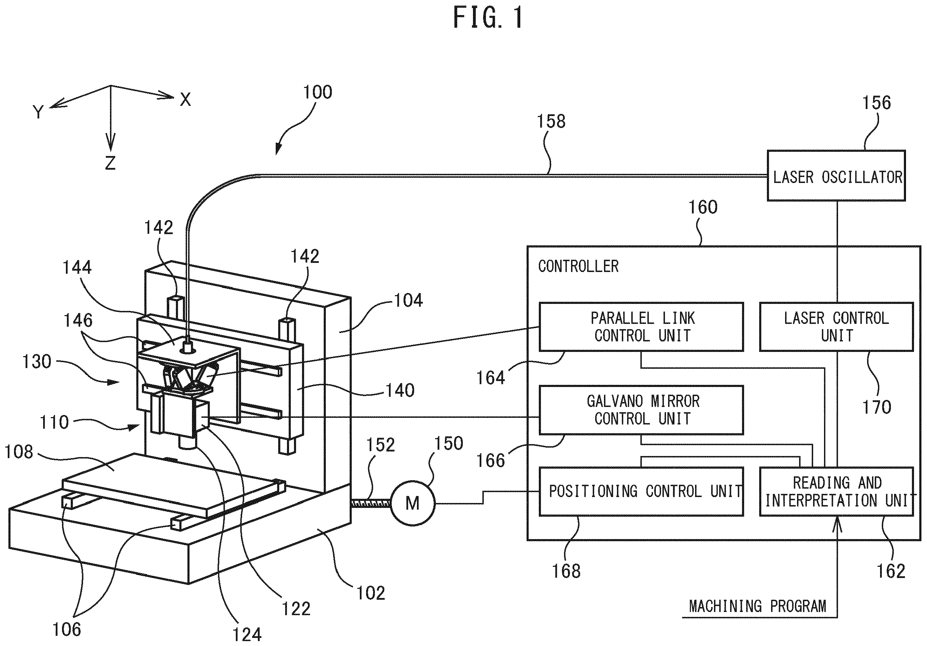

In FIG. 1, the laser machining apparatus 100 according to a preferred embodiment of the present invention comprises a bed 102 serving as a base which is affixed to the floor of a factory or the like. A column 104 is erected on a rear portion of the upper surface of the bed 102, and a table 108 is attached to a front portion of the upper surface of the bed 102 so as to be capable of reciprocating along a pair of Y-axis guide rails 106 which extend in the horizontal frontward and rearward directions.

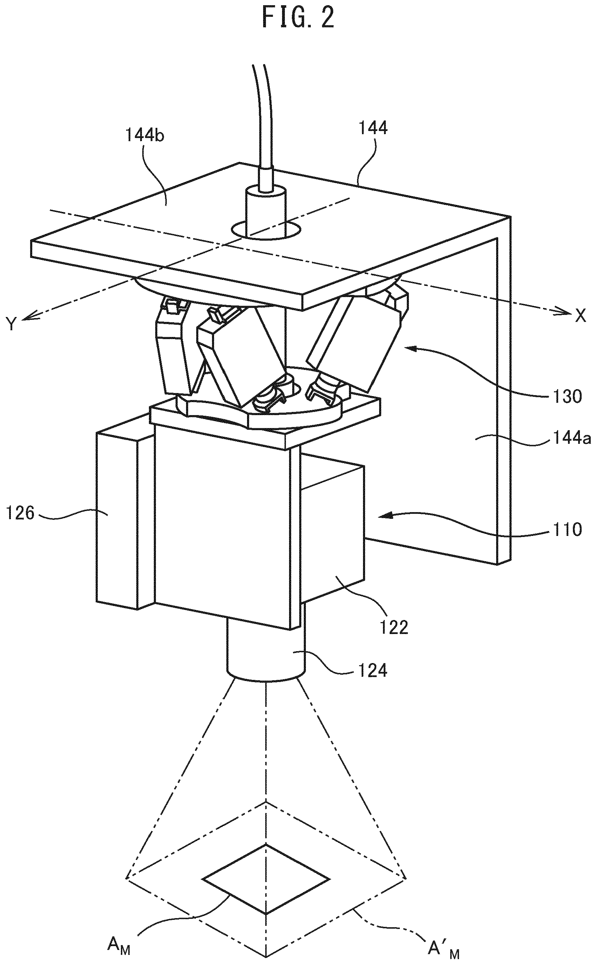

A Z-axis slider 140 is attached to the column 104 so as to be capable of reciprocating along a pair of Z-axis guide rails 142 which extend in the upward and downward directions on a front surface of the column 104. A headstock 144 as a slide member is attached to the Z-axis slider 140 so as to be capable of reciprocating along a pair of X-axis guide rails 146 which extend in the horizontal leftward and rightward directions on a front surface of the Z-axis slider 140. In the present embodiment, the headstock 144 has at least a vertical wall 144a and a horizontal wall 144b (FIG. 2), and is formed in a substantially L-shape. A laser irradiation head 110 is attached to a lower surface of the horizontal wall 144b of the headstock 144 via a parallel link mechanism 130. Laser light is introduced into the laser irradiation head 110 from a laser oscillator 156 via a light guide member 158, such as an optical fiber.

The headstock 144, table 108, and Z-axis slider 140 are driven and positioned in the X-axis, Y-axis, and Z-axis directions by respective X-axis, Y-axis, and Z-axis linear feed axis devices (not illustrated). The X-axis, Y-axis, and Z-axis linear feed axis devices can each comprise a ball screw (not illustrated) extending in the X-axis, Y-axis, or Z-axis direction, a nut (not illustrated) for connecting to the X-axis, Y-axis, or Z-axis ball screw, to which the headstock 144, table 108, or Z-axis slider 140 is attached, and an X-axis, Y-axis, or Z-axis servo motor (not illustrated) which is connected to one end of the X-axis, Y-axis, or Z-axis ball screw. In FIG. 1, the servo motor 150 represents each of the X-axis, Y-axis, and Z-axis servo motors, and the ball screw 152 represents each of the X-axis, Y-axis, and Z-axis ball screws.

The X-axis, Y-axis, and Z-axis servo motors 150 are connected to a controller 160. The controller 160 comprises a reading and interpretation unit 162, a parallel link control unit 164, a Galvano mirror control unit 166, a positioning control unit 168, and a laser control unit 170 as primary constituent elements. A machining program is input to the reading and interpretation unit 162, and instructions are output from the reading and interpretation unit 162 to the parallel link control unit 164, the Galvano mirror control unit 166, the positioning control unit 168, and the laser control unit 168 in accordance with the machining program.

The reading and interpretation unit 162, the parallel link control unit 164, the Galvano mirror control unit 166, the positioning control unit 168, and the laser control unit 170 can be configured to comprise a computer device comprising a CPU (central processing unit), memory devices such as RAM (random access memory) and ROM (read-only memory), a storage device such as an HDD (hard disk drive) or SSD (solid state drive), input/output ports, and bidirectional busses connecting these components to each other, as well as associated software, and a power source for driving the X-axis, Y-axis, and Z-axis servo motors 150, as well as an X scanning motor 112, a Y scanning motor 116, and actuators such as linear actuators 138-1 to 138-6 of the Galvano scanner, which are described later. The controller 160 may be constituted by software as a part of an NC device or PLC for the laser machining apparatus 100.

The X-axis, Y-axis, and Z-axis servo motors 150 are connected to the positioning control unit 168 of the controller 160. The positioning control unit 168 is an NC device, and controls the position of the headstock 144 by controlling the X-axis, Y-axis, and Z-axis servo motors 150. Furthermore, the laser oscillator 156 is connected to the laser control unit 170 and the ON-OFF control thereof is performed by the laser control unit 170.

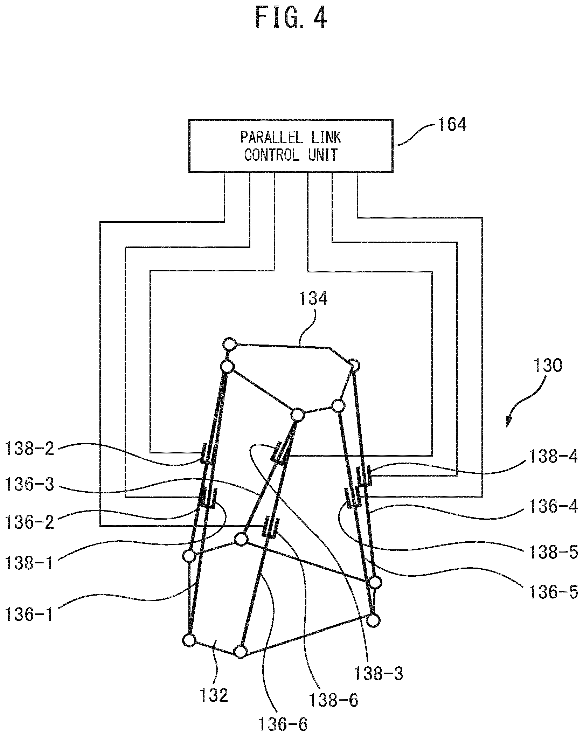

The parallel link mechanism 130 is a parallel manipulator which supports one end effector by a plurality of serial manipulators provided in parallel, and as shown in, for example, FIG. 4, can be configured as a Stewart platform comprising a base 132, six jacks or linear joints 136-1 to 136-6 which are pivotably connected to the base 132, and an end effector 134 which is pivotably connected to the other ends of the linear joints 136-1 to 136-6. In the present embodiment, the base 132 is affixed to the horizontal wall 144b of the headstock 144, and the laser irradiation head 110 is attached to the end effector 134.

The plurality of serial manipulators of the parallel link mechanism 130 are connected to the parallel link control unit 164 of the controller 160, and control the X-axis, Y-axis, and Z-axis direction positions and rotational position of the end effector 134 relative to the headstock 144. In the example shown in FIG. 4, the linear joints 136-1 to 136-6 can comprise, for example, linear actuators 138-1 to 138-6 such as servo motors or stepping motor coupled to pneumatic cylinders, hydraulic cylinders, or the ball screws. The linear actuators 138-1 to 138-6 are connected to the parallel link control unit 164 of the controller 160, and the lengths of the linear joints 136-1 to 136-6 are controlled by the parallel link control unit 164. As a result, the relative X-axis, Y-axis, and Z-axis positions and the rotational position of the end effector 134 with respect to the headstock 144 are controlled.

The laser irradiation head 110 comprises a Galvano scanner which moves the irradiation position on the surface of a workpiece W of the laser light in two directions in a housing 122. More specifically, the laser irradiation head 110 includes a first mirror or X scanning mirror 114 and a second mirror or Y scanning mirror 118 constituting Galvano mirrors, and an X scanning motor 112 and Y scanning motor 116 constituting Galvano mirror drive motors. The laser irradiation head 110 further comprises an fθ lens 120, which is a scanning lens. The laser irradiation head 110 comprises a focusing lens (not illustrated) which focuses the laser light. The X scanning mirror 114, Y scanning mirror 118, X scanning motor 112, Y scanning motor 116, and fθ lens 120 are arranged in the housing 122. A nozzle 124 for irradiating the laser light is provided on the lower end surface of the housing 122.

The X scanning mirror 114 is rotationally driven by the X scanning motor 112 about an axis parallel to the Z axis. The Y scanning mirror 118 is rotationally driven by the Y scanning motor 116 about an axis parallel to the X axis. The X scanning motor 112 and the Y scanning mirror 116 are controlled by the Galvano mirror control unit 166 of the controller 160. The laser light output from the laser oscillator 156 is introduced into the housing 122 via a light guide member 158 such as an optical fiber, is reflected by the X scanning mirror 114 and the Y scanning mirror 118, passes through the fθ lens 120, and is irradiated from the nozzle 124 toward the workpiece W (laser light BL).

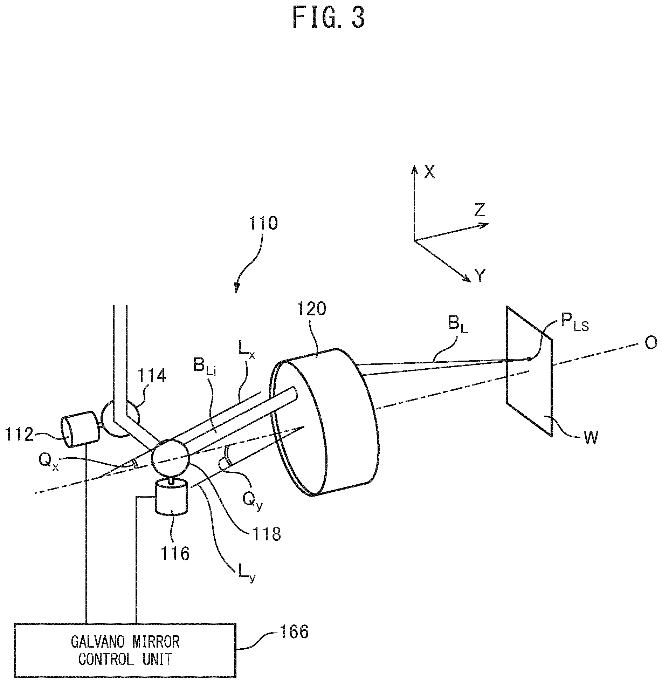

The X scanning motor 112 and Y scanning motor 116 are controlled by the Galvano mirror control unit 166, whereby incident angles θx and θy of laser light BLi incident on the fθ lens 120 are controlled with respect to an optical axis O, and as a result, the position of laser spot PLS on the surface of workpiece W is continuously controlled in two directions orthogonal to the optical axis O of the laser irradiation head 110. The incident angle θx is the angle formed by straight line Lx and the optical axis O when the laser light BLi incident on the fθ lens 120 is projected onto the ZX plane, and the incident angle θy is the angle formed by straight line Ly and the optical axis O when the incident laser light BLi is projected onto the YZ plane. In the example of FIG. 3, the optical axis O of the laser irradiation head 110 is the optical axis of the fθ lens 120, which extends parallel to the Z axis when the parallel link mechanism 130 is in the home position. When the parallel link mechanism 130 is in the home position, the end effector 134 is parallel to the base 132.

Furthermore, the fθ lens 120 as the scanning lens may be movable in the optical axis direction, and the position of the fθ lens 120 in the optical axis direction may be controlled by the controller 160. Further, the scanning lens may be a telecentric lens instead of the fθ lens.

According to the present embodiment, the range in which the laser light represented by AM in FIG. 2 can be irradiated, i.e., the range in which the laser light can perform machining, is expanded as shown by the two-dot dashed line AM' by changing the posture of the laser irradiation head 110 with the parallel link mechanism 130.

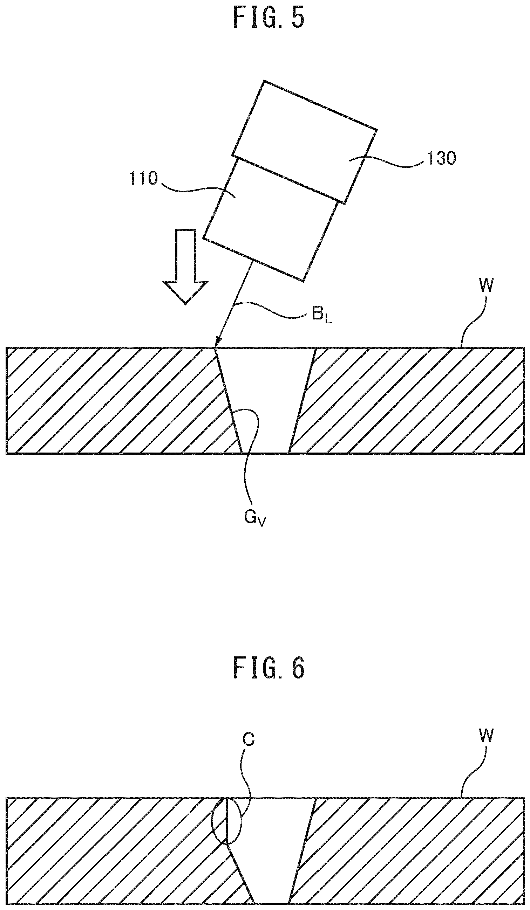

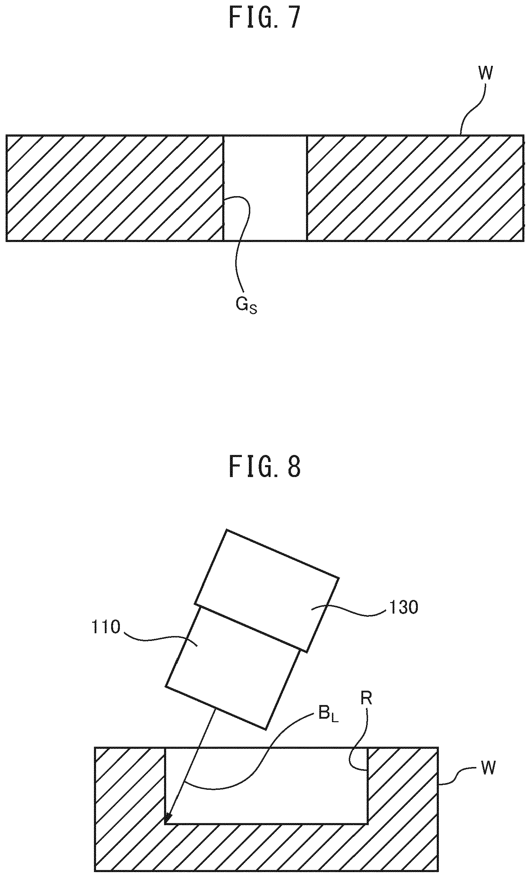

Furthermore, conventionally, in laser machining apparatuses, the laser light irradiated onto a workpiece has a tapered conical shape because it is focused by the focusing lens, and thus, when a groove Gv is formed in the workpiece W, as shown in FIG. 5, the cross-section of the groove is tapered such that the diameter reduces toward the tip side. According to the present embodiment, by changing the posture of the laser irradiation head 110 with the parallel link mechanism 130 so that the optical axis O of the laser irradiation head 110 is inclined with respect to the Z axis, and moving the irradiation position of the laser light onto the side surface of the groove Gv with the galvano scanners 112 to 118, the laser irradiation head 110 is linearly fed in the three orthogonal axial directions by the X-axis, Y-axis, and Z-axis feed axis devices of the laser machining apparatus 100 while the side surfaces are machined vertically, as indicated by reference sign C in FIG. 6, whereby a groove Gs having vertical side surfaces can be formed as shown in FIG. 7.

Furthermore, according to the present embodiment, when the workpiece W has a recess or pocket, as shown in FIG. 8, the side surfaces of the recess or pocket can be laser machined.

In the present embodiment, there is provided an imaging device 126 affixed to the laser irradiation unit 110 and the end effector 134, as shown in FIG. 2. The imaging device 126 is used to detect the irradiation position of the laser light on the surface of the workpiece and to detect whether the laser light is in focus or in focus on the workpiece surface. In the present embodiment, there are three irradiation position control means, X-axis, Y-axis, and Z-axis linear feed axis devices, the parallel link mechanism 130, and the Galvano scanner, which are capable of controlling the irradiation position of the laser light. Though each of the three control means can accurately control the irradiation position, each has a slight error. Thus, three error elements overlap, and it becomes difficult to correct the error. With the imaging device 126, the three errors are collectively obtained as errors between the laser irradiation unit 110 and the workpiece without distinguishing, and the parallel link mechanism 130 is driven so as to cancel the errors, whereby the errors are collectively corrected. As a result, even if there are three irradiation position control means as in the laser machining apparatus of the present invention, errors can be quickly and efficiently corrected. Though a CCD camera is used as the imaging device 126 in the present embodiment, a camera using a CMOS sensor may also be used. Further, though the parallel link mechanism 130 is used as the control means for error correction, the error can be corrected by any one of the X-axis, Y-axis, and Z-axis linear feed axis devices and the Galvano scanner.

Since there are three irradiation position control means, including the X-axis, Y-axis, Z-axis linear feed axis devices, the parallel link mechanism 130, and the Galvano scanner, in the present invention, a positioning program in which instructions for controlling the X-axis, Y-axis, and Z-axis linear feed axis devices are described, a parallel link program in which instructions for controlling the parallel link mechanism 130 are described, and a Galvano program in which instructions for controlling the Galvano scanner are described are necessary. In addition thereto, a laser oscillator program which performs ON-OFF control of the laser oscillator is also necessary. Thus, though the input of the machining programs becomes complicated, since there is provided a program integration unit which, after they are created, inputs a positioning program from a positioning program input unit, inputs a parallel link program from a parallel link program input unit, and inputs a Galvano program from a Galvano program input unit, and which integrates these programs, these programs can be input to the reading and interpretation unit 162 of the controller 160.

### REFERENCE SIGNS LIST

- 100: Laser Machining Apparatus
- 102: Bed
- 104: Column
- 106: Y-axis Guide Rail
- 108: Table
- 110: Laser Irradiation Head
- 112: X Scanning Motor
- 114: X Scanning Mirror
- 116: Y Scanning Motor
- 118: Y Scanning Mirror
- 120: fθ Lens
- 122: Housing
- 124: Nozzle
- 130: Parallel Link Mechanism
- 132: Base
- 134: End Effector
- 136-1: Linear Joint
- 136-2: Linear Joint
- 136-3: Linear Joint
- 136-4: Linear Joint
- 136-5: Linear Joint
- 136-6: Linear Joint
- 138-1: Linear Actuator
- 138-2: Linear Actuator
- 138-3: Linear Actuator
- 138-4: Linear Actuator
- 138-5: Linear Actuator
- 138-6: Linear Actuator
- 140: Z-axis Slider
- 142: Z-axis Guide Rail
- 144: Headstock
- 144a: Vertical Wall
- 144b: Horizontal Wall
- 146: X-axis Guide Rail
- 150: Servo Motor
- 152: Ball Screw
- 156: Laser Oscillator
- 158: Light Guide Member
- 160: Controller
- 162: Reading And Interpretation Unit
- 164: Parallel Link Control Unit
- 166: Galvano Mirror Control Unit
- 168: Positioning Control Unit
- 170: Laser Control Unit

## Claims

1. A laser machining apparatus which machines a workpiece by moving an irradiation position of laser light on the workpiece while irradiating the workpiece, which is arranged and affixed on a table, with the laser light, the laser machining apparatus comprising:
a laser oscillator,
a laser irradiation head which emits laser light from the laser oscillator toward the workpiece, the laser irradiation head comprising a Galvano scanner for moving an irradiation position of the laser light on a surface of the workpiece in two directions,
a parallel manipulator which changes a posture of the laser irradiation head,
a slide member which supports the parallel manipulator, and
a linear feed axis device which moves the slide member relative to the table in at least two orthogonal directions.

2. The laser machining apparatus according to claim 1, wherein the parallel manipulator comprises a base which is affixed to the slide member, and an end effector which is connected to the base via a plurality of linear joints which are arranged in parallel, and the laser irradiation head is attached to the end effector.

3. The laser machining apparatus according to claim 1, further comprising an imaging device which images the irradiation position of the laser light on the surface of the workpiece.
